# EUROPEAN PATENT SPECIFICATION

(11) **EP 3 770 524 B1**
(45) Date of publication and mention of the grant of the patent: **15.11.2023**
(21) Application number: 18910529.9
(22) Date of filing: 29.12.2018
(51) Int. Cl.: F24F 13/00, F16B 5/06, F16B 21/07, F16B 21/06

(54) **BUCKLE ASSEMBLY AND AIR CONDITIONER**
SCHLOSSANORDNUNG UND KLIMAANLAGE
ENSEMBLE BOUCLE ET CLIMATISEUR

(30) Priority: 19.03.2018 CN 201810224376
(43) Date of publication of application: 27.01.2021
(73) Proprietor: Ningbo Aux Electric Co., Ltd., Ningbo, Zhejiang 315000 (CN); Aux Air Conditioner Co., Ltd, Jiangshan Town, Yinzhou District Ningbo Zhejiang 315191 (CN)
(72) Inventor: HUANG, Jiabo, Ningbo, Zhejiang 315191 (CN); SHANG, Bin, Ningbo, Zhejiang 315191 (CN)
(74) Representative: Weickmann & Weickmann PartmbB
(86) International application number: PCT/CN2018/125505
(87) International publication number: WO 2019/179202

(56) References cited:
- WO-A1-2015/192626
- CN-A- 1 730 953
- CN-A- 102 667 183
- CN-A- 108 253 606
- CN-U- 208 025 754
- JP-A- 2001 050 228
- JP-A- 2006 071 014
- JP-A- 2006 071 014
- US-A1- 2007 289 770
- US-A1- 2015 121 664
- US-B1- 6 324 731

## Description

### FIELD OF THE INVENTION

The present invention relates to the technical field of buckle structures, in particular to a buckle assembly and an air conditioner.

### BACKGROUND OF THE INVENTION

At present, the connection of multiple plastic parts mostly utilizes the elastic deformation of plastic, and is connected by buckles. However, this connection method has defects, and it is always difficult to balance assembly and disassembly. In order to facilitate disassembly, concessions must be made in terms of assembly reliability; for better reliability, concessions must be made in terms of easy disassembly. Frequent occurrences of parts failure after the parts are loaded and disassembled have caused problems for designers.

Some background information is found at a Japanese patent application JP 2006-071014 A. JP 2006-071014 A discloses that: the whole clip 1a is substantially cylindrical, and this clip is composed of a central communicating hole 11, a central part 12 having substantially the same outside diameter as inside diameter of an opening to be mounted, and a tip part 13 and a rear end part 14 having larger diameter than inside diameter of the opening to be mounted. A ring-like cut-out part 132 extending in the direction of axial line from a rear end face 131 is provided in a rear end part 13. A projection 16 protruding onto a central communicating hole side is formed in a part facing the central communicating hole 11. By enlarging the ring-like cut-out part 132 in the radial direction, a part on an outer side in the radial direction more than the ring-like cut-out part 132 is displaced toward an outer side, and a part on an inner side in the radial direction is displaced toward an inner side. The clip means is composed of the clip 1a and a separate fastening device 2.

### SUMMARY OF THE INVENTION

In view of this, a buckle assembly is proposed in the present invention. The buckle assembly is easy to disassemble and can connect securely.

To achieve the above purpose, the technical solution of the present invention is implemented as follows.

A buckle assembly of the present invention, as defined in claim 1, includes a first buckle member, a second buckle member, and a third buckle member.

The second buckle member includes a connecting base and two elastic tabs, and the two elastic tabs are disposed on the connecting base respectively and are oppositely disposed. Two first clamping protrusions are respectively disposed on the same ends of the two elastic tabs, and form a first latching structure. Two second clamping protrusions are respectively disposed on the other ends of the two elastic tabs, and form a second latching structure. The connecting base is opened with a through hole, a first latching portion is disposed on the first buckle member, and the first latching portion is latched with the first latching structure. A second latching portion is disposed on the third buckle member, and the second latching portion passes through the through hole and is clamped with the second latching structure, or the second latching structure passes through the through hole and is latched with the second latching portion. The first clamping protrusions of the two elastic tabs are respectively disposed on one side of the two elastic tabs, and are disposed oppositely. The first latching portion is a latching port, and the first latching structure extends into the latching port and is clamped with the first buckle member. The second clamping protrusions of the two elastic tabs are respectively disposed on the other side of the two elastic tabs, and are disposed oppositely. The second latching portion is a latching pin, and the first latching pin extends into between the second latching protrusions of the two elastic tabs and is clamped with the second latching structure. Two connecting plates are protruded from the connecting base, and the two elastic tabs are respectively disposed on one end of the two connecting plates away from the connecting base and form an elastic structure having a h-shaped cross section. A limit groove is formed between the first clamping protrusions and the connecting plates, and the first buckle member is disposed in the limit groove. Further, the latching port has a rectangle cross section, and the first clamping protrusions of the two elastic tabs have an elongated strip shape and are clamped with two oppositely-disposed inner walls of the latching port respectively.

Further, the two inner walls of the latching port have inclined planes, and the two inclined planes are disposed oppositely and used to cooperate with the first clamping protrusions of the two elastic tabs, respectively.

Further, the latching pin includes a first connecting section and a second connecting section that are connected with each other, and two sides of the first connecting section and the second connecting section form clamp grooves, respectively. The second connecting section extends into between the second clamping protrusions of the two elastic tabs, and the two second clamping protrusions are clamped with the two clamp grooves, respectively.

Further, each of the clamp grooves and the second clamping protrusions has an elongated strip shape, and each of the clamp grooves and the second clamping protrusions has an arc-shaped cross section.

Further, the latching pin further includes a third connecting section, the third connecting section is disposed on the second connecting section, and a distance between the third connecting section and the adjacent elastic tab is smaller than a thickness of the first clamping protrusion.

Further, the third buckle member includes a connecting body, the connecting body has an abutment surface, the second latching portion is disposed on the connecting body, and the abutment surface abuts against the connecting base in a state where the second latching structure is latched with the second latching portion.

Compared with the prior art, the buckle assembly of the present invention has the following advantages:
In the buckle assembly of the present invention, two elastic tabs of a second buckle member are disposed oppositely on a connecting base, and a though hole is disposed on the connecting base, so that when the first latching structure formed on the same end of the two elastic tabs is latched with a first latching portion of a first buckle member, a second latching structure formed by the other ends of the two elastic tabs are latched with a second latching portion of a third buckle member through the through hole, thereby achieving the connection of the first buckle member, the second buckle member, and the third buckle member, wherein the connection is firm, the disassembly is facilitated, and the design is compact while having strong versatility.

Another object of the present invention is to provide an air conditioner, which can realize the reliability of the connection between the panel, the middle frame and the base, and can facilitate disassembly.

To achieve the above purpose, the technical solution of the present invention is implemented as follows.

An air conditioner is provided in the present invention, which includes a panel, a middle frame, a base and the above-mentioned buckle assembly.

The buckle assembly includes a first buckle member, a second buckle member, and a third buckle member.

The second buckle member includes a connecting base and two elastic tabs, and the two elastic tabs are disposed on the connecting base respectively and are oppositely disposed. Two first clamping protrusions are respectively disposed on the same ends of the two elastic tabs, and form a first latching structure. Two second clamping protrusions are respectively disposed on the other ends of the two elastic tabs, and form a second latching structure.

The connecting base is opened with a through hole, a first latching portion is disposed on the first buckle member, and the first latching portion is latched with the first latching structure. A second latching portion is disposed on the third buckle member, and the second latching portion passes through the through hole and is clamped with the second latching structure, or the second latching structure passes through the through hole and is latched with the second latching portion.

The first buckle member is connected to the base, the connecting base is connected to a middle frame, and the third buckle member is connected to a panel.

The two elastic tabs are disposed on the middle frame, and the two elastic tabs are disposed on the middle frame respectively and oppositely. The same ends of the two elastic tabs are provided with a first clamping protrusion, respectively, and form a first latching structure together. The other ends of the two elastic tabs are provided with a second clamping protrusion, respectively, and form a second latching structure.

The middle frame is opened with a through hole, the base is provided with a first latching portion, and the first latching portion is clamped with the first latching structure. The panel is provided with a second latching portion, and the first latching portion passes through the through hole and is clamped with the second latching structure, or the second latching structure passes through the through hole and is latched with the second latching portion.

Compared to the prior art, the air conditioner of the disclosure has the following advantages:
In the air conditioner of the present invention, the first buckle member is connected to a base, the connecting base is connected to a middle frame, and the third buckle member is connected to a panel, so that the connection between the panel, the middle frame and the base is achieved, wherein the connection is firm, the disassembly is facilitated, and the design is compact while improving the service life.

### BRIEF DESCRIPTION OF THE DRAWINGS

Aspects of the present invention are best understood from the following detailed description when read with the accompanying figures. The exemplary embodiments of the present invention and the description thereof are used to explain the present invention, and do not constitute improper limitations on the preset invention. In the drawings:
Fig. 1 is a structural diagram of a buckle assembly according to a first embodiment of the present invention.
Fig. 2 is a structural diagram of a first buckle member according to a first embodiment of the present invention.
Fig. 3 is a cross-sectional structural view of a buckle assembly according to a first embodiment of the present invention.
Fig. 4 is a structural diagram of a second buckle member according to a first embodiment of the present invention.
Fig. 5 is a structural diagram of a third buckle member according to a first embodiment of the present invention.
Fig. 6 is a first structural diagram of a buckle assembly according to the preferred embodiment.
Fig. 7 is a second structural diagram of a buckle assembly according to a not claimed embodiment.
Fig. 8 is a third structural diagram of a buckle assembly according to a not claimed embodiment.
Fig. 9 is a fourth structural diagram of a buckle assembly according to the preferred embodiment.

**List of serial numbers in the figures:**

| | | | | | |
|---|---|---|---|---|---|
| 1 - | Buckle assembly; | 2 - | First buckle member; | 3 - | Second buckle member; |
| 4 - | Third buckle member; | 5 - | Latching port; | 6 - | Inclined plane; |
| 7 - | Connecting base; | 8 - | Connecting plate; | 9 - | Elastic tab; |
| 10 - | Through hole; | 11 - | First clamping protrusion; | 12 - | First latching structure; |
| 13 - | Limit groove; | 14 - | Second clamping protrusion; | 15 - | Second latching structure; |
| 16 - | Reinforcing rib; | 17 - | Connecting body; | 18 - | Latching pin; |
| 19 - | First connecting section; | 20 - | Second connecting section; | | |
| 21 - | Clamp groove; | 22 - | Third connecting section; | 23 - | Abut surface. |

### DESCRIPTION OF THE PREFERRED EMBODIMENTS

It should be noted that, in the case of no conflicts, the embodiments and features in the embodiments of the present invention can be combined mutually, as long as they fall within the wording of the appended claims.

Moreover, terms like "first", "second" etc. referred in the embodiments of the present invention are only used for description, not be considered as a designation or designation of relative importance.

The present invention is described in detail with reference to drawings and with combination of embodiments.

### Embodiment One

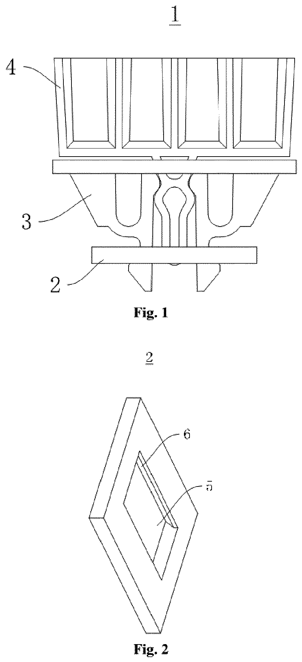

Fig. 1 is a view showing a structure of a buckle assembly 1 according to the present embodiment. With reference to Fig. 1, the present disclosure discloses a buckle assembly 1 including a first buckle member 2, a second buckle member 3, and a third buckle member 4. The first buckle member 2 and the third buckle member 4 may be detachably connected to the second buckle member 3 respectively.

Fig. 2 is a view showing a structure of the first buckle member 2 according to the present embodiment. With reference to Fig. 2, in the present embodiment, the first buckle member 2 has a plate-like shape, and is opened with a latching port 5 for the second buckle member 3 to extend into to be engaged with the first buckle member 2.

In order to enhance the firmness for the connection between the first buckle member 2 and the second buckle member 3, in the present embodiment, the latching port 5 has a rectangle cross section.

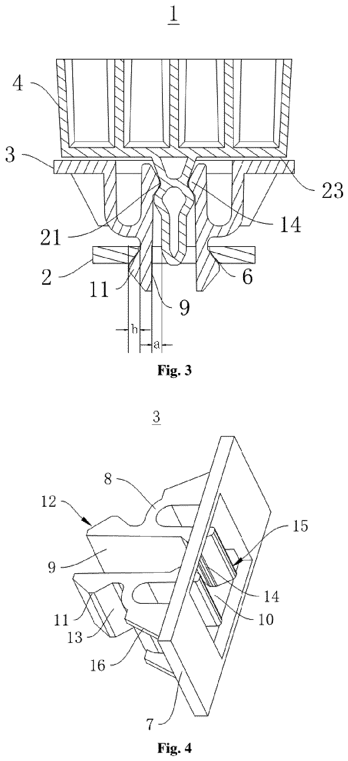

Fig. 3 is a section view of a buckle assembly 1 according to the present embodiment. With combination of Figs. 2 and 3, the latching port 5 has two oppositely-disposed inner walls that have a long length, and the two inner walls are used to be clamped with the second buckle member 3 respectively.

In the present embodiment, the two inner walls have inclined planes 6, and the two inclined planes 6 are disposed oppositely. And, it should be noted that the plate-like first buckle member 2 has a first surface and a second surface that are disposed oppositely, wherein the first surface is used to be disposed facing towards the second buckle member 3. The latching port 5 penetrates through the first surface and the second surface. The two inclined planes 6 are disposed facing towards the second surface.

This structure may serve as a transition when the first buckle member 2 is latched with the second buckle member 3, so as to ensure the smoothness of the connection process.

Fig. 4 is a view showing a structure of the second buckle member 3 according to the invention. With reference to Fig. 4, the second buckle member 3 includes a connecting base 7, two connecting plates 8 and two elastic tabs 9.

Among them, the two connecting plates 8 are disposed oppositely, the two elastic tabs 9 are disposed on one end of the two connecting plates 8 away from the connecting base 7 respectively and form an elastic structure having an h-shaped cross section, and the two elastic tabs 9 are disposed oppositely at intervals.

It should be understood that the two elastic tabs 9 may be elastically connected to the connecting base 7 through the two connecting plates 8 respectively.

With combination of Figs. 3 and 4, in the present embodiment, the connecting base 7 has a plate-like shape, a middle portion of the connecting base 7 is opened with a through hole 10, and the through hole 10 is used for a third connecting member to pass through.

It should be noted that in the present embodiment, the through hole 10 has a rectangle shape, and a length and a width of the through hole 10 are greater than a distance between the two elastic tabs 9 and a width of the elastic tab 9 itself respectively.

In the present embodiment, the two elastic tabs 9 are disposed perpendicular to the connecting base 7.

It should be understood that in other preferred embodiments, the two elastic tabs 9 and the connecting base 7 may also be elastically connected to each other in other connecting ways. For example, according to a not claimed embodiment, the two elastic tabs 9 are disposed oppositely at the through hole 10, and are connected to the inner walls of the through hole 10 respectively.

The same ends of the two elastic tabs 9 are provided with a first clamping protrusion 11 respectively, and form a first latching structure 12 together. The first latching structure 12 is used to cooperate with the first buckle member 2.

According to the invention, the two first clamping protrusions 11 are disposed on one end of the two elastic tabs 9 respectively, and disposed oppositely.

It should be understood that the two elastic tabs 9 extend into the latching port 5, and the two first clamping protrusions 11 engage with the two oppositely-disposed inner walls of the latching port 5 respectively.

According to the invention, a limit groove 13 is formed between the first clamping protrusion 11 and the connecting plate 8. It should be understood that in a state where the two first clamping protrusions 11 are engaged with the inner walls of the latching port 5, the first buckle member 2 is disposed in the limit groove 13. The limit groove 13 may block the first buckle member 2 from further moving towards the connecting base 7 to achieve a limitation.

In the present embodiment, in order to enlarge increase the contact area with the inner walls of the latching port 5 to enhance the firmness of the connection, the first clamping protrusions 11 of the two elastic tabs 9 are in an elongated strip shape, and cooperate with the two oppositely-disposed inner walls of the latching port 5.

It should be understood that in other embodiments, the first clamping protrusion 11 may also be used to be connected to two other inner walls having a shorter length of the latching port 5.

It should be noted that the first clamping protrusion 11 on each of the elastic tabs 9 may have more than one protrusion, so as to achieve engagement of different degrees.

With continuous reference to Fig. 3, according to the invention, the other ends of the two elastic tabs 9 are provided with a second clamping protrusion 14 respectively, and form a second latching structure 15. The second latching structure 15 is used to cooperate with the third buckle member 4.

According to the invention, the two second clamping protrusions 14 are disposed on the other sides of the two elastic tabs 9 that are opposite to the first clamping protrusions 11 respectively, and the two second clamping protrusions 14 are disposed oppositely.

In the present embodiment, the second clamping protrusions 14 are in an elongated strip shape, and the second clamping protrusions 14 have an arc cross section.

This structure facilitates the firmness of connection with the third buckle member 4, and facilitates the smoothness of the latching process.

In the present embodiment, the two first clamping protrusions 11 and the two second clamping protrusions 14 are located at the same side of the through hole 10.

It should be understood that in other preferred embodiments, the two elastic tabs 9 may also extend from the through hole 10, so that the two first clamping protrusions 11 are located at one side of the through hole 10, and the two second clamping protrusions 14 are located at the other side of the through hole 10.

In the present embodiment, a reinforcing rib 16 is further disposed between the two connecting plates 8 and the connecting base 7, so as to enhance the stability of the elastic structure.

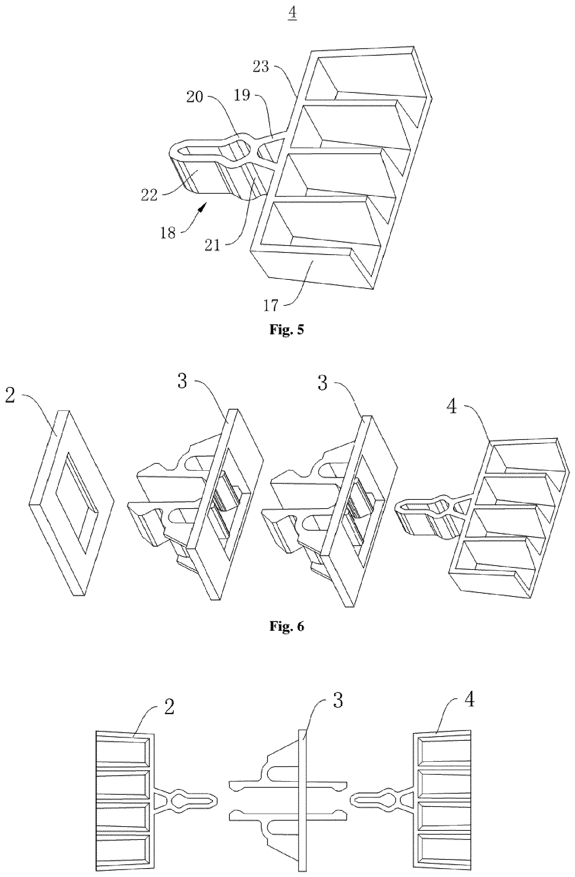

Fig. 5 is a view showing a structure of the third buckle member 4 according to the invention.

With reference to Fig. 5, the third buckle member 4 includes a connecting body 17 and a latching pin 18. The latching pin 18 is disposed on the connecting body 17. The latching pin 18 is used to be latched with the second latching structure 15.

With combination of Figs. 3 and 5, in the present embodiment, the latching pin 18 includes a first connecting section 19 and a second connecting section 20 that are connected with each other, and two sides of the first connecting section 19 and the second connecting section 20 form clamp grooves 21 respectively; the second connecting section 20 extends into between the second clamping protrusions 14 of the two elastic tabs 9, and the two second clamping protrusions 14 are clamped with the two clamp grooves 21 respectively.

It should be noted that in the present embodiment, the clamp groove 21 may be in an elongated strip shape, and the clamp groove 21 has an arc cross section. It is to be understood that in the buckle assembly 1 disclosed in the present embodiment, the latching pin 18 of the third buckle member 4 extends into the through hole 10 and into between the two second clamping protrusions 14 of the two elastic tabs 9. In this way, the sliding is smooth, the clamping is facilitated, the contact area is large and the clamping is stable.

In the present embodiment, the latching pin 18 further includes a third connecting section 22, and the third connecting section 22 is disposed on the second connecting section 20.

In the present embodiment, a distance between the third connecting section 22 and the adjacent elastic tab 9 is smaller than a thickness of the first clamping protrusion 11.

It should be noted that the distance between the third connecting section 22 and the adjacent elastic tab 9 described in the present embodiment refers to a distance a of a gap formed between the elastic tab 9 and the third connecting section 22 in a state where the first clamping protrusions 11 are clamped with the first buckle member 2. The thickness of the first clamping protrusion 11 refers to a distance b between a vertex of the first clamping protrusion 11 and the elastic tab 9. It should be understood that there is a certain distance between the third connecting section 22 and the elastic tabs 9 on both sides to form a gap, which may facilitate the deformation of the elastic tabs 9. And, a distance a between the third connecting section 22 and the adjacent elastic tab 9 is smaller than the thickness b of the first clamping protrusion 11, so that in a state where the two first clamping protrusions 11 of the second buckle member 3 are engaged with the first buckle member 2 and the latching pin 18 of the third buckle member 4 is engaged with the two second clamping protrusions 14, the first buckle member 2 and the second buckle member 3 are locked with each other, and the elastic tabs 9 may not be withdrawn from the latching port 5, thereby making the engagement structure reliable and achieving self-locking.

Optionally, the thickness b of the first clamping protrusion 11 may be configured to be 0.2 mm to 0.5 mm larger than the distance a between the third connecting section 22 and the adjacent elastic tab 9.

In the present embodiment, the connecting body 17 has an abut surface 23, the latching pin 18 is disposed on the abut surface 23, and the abut surface 23 abuts against the connecting base 7 in a state where the second latching structure 15 is latched with the latching pin 18.

It is to be understood that this structure facilitates the stability of the connecting structure of the second buckle member 3 and the third buckle member 4, which is not easy to shake.

In other preferred embodiments, the connecting body 17 may be further provided with a groove, so that the latching pin 18 is disposed at a bottom wall of the groove for being latched with the second latching structure 15 protruding from the through hole 10.

With combination of Figs. 1 and 3, when the buckle assembly 1 disclosed by the present embodiment is assembled, the first latching structure 12 of the two elastic tabs 9 of the second buckle member 3 is extended into the latching port 5 under the elastic action of the elastic tabs 9, and the two first clamping protrusions 11 is clamped with the two inner walls of the lathing port 5 with the restoring force of the elastic tabs 9. Then, the latching pin 18 of the third buckle member is extended into the through hole 10, and further extended into between the two second clamping protrusions 14 with the elastic force of the two elastic tabs 9, so that the two clamping protrusions are clamped with the two latching grooves 21 with the restoring force of the two elastic tabs 9.

It should be noted that in the invention, the first clamping structure and the second clamping structure share the two elastic tabs 9, and the first clamping protrusions 11 are opposite to the second clamping protrusions 14 on each of the elastic tabs 9, so that the buckling structure has a latching force in a single direction, with a linkage effect. In a state where the latching pin 18 is clamped with the two clamping protrusions 14, which is equivalent to locking the two first clamping protrusions 11 with the latching port 5 firmly, the effect of self-locking is achieved. Since the distance a between the third connecting section 22 and the adjacent elastic tab 9 is smaller than the thickness b of the first clamping protrusion 11, unlocking the first buckle member 2, the second buckle member 3 and the third buckle member 4 may be achieved by pulling out the latching pin 18 when unlocking is required.

Fig. 6 is a view showing a first structure of a buckle assembly 1 according to the present preferred embodiment. With reference to Fig. 6, it should be noted that in other preferred embodiments, the buckle assembly 1 disclosed in the present embodiment may also achieve the connection among a plurality of different parts by adding the amount of the second buckle member 3.

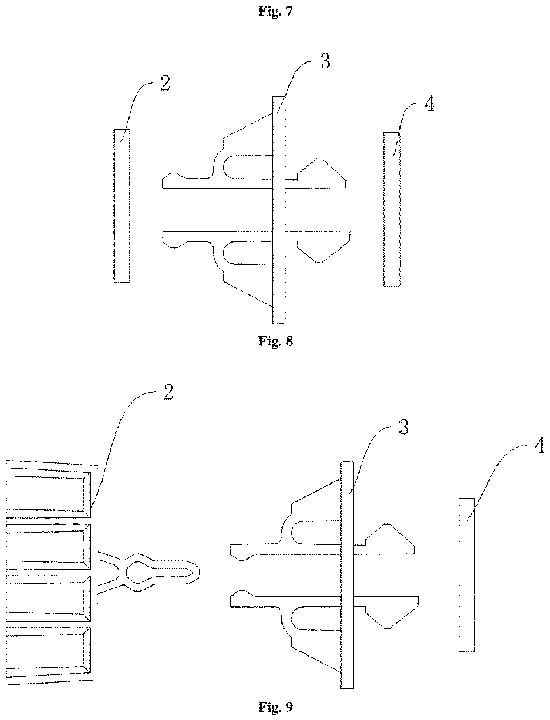

Fig. 7 is a view showing a second structure of a buckle assembly 1 not according to the invention. Fig. 8 is a view showing a third structure of a buckle assembly 1 not according to the invention. Fig. 9 is a view showing a fourth structure of a buckle assembly 1 according to the present preferred embodiment. With combination of Figs. 7 to 9, it is to be understood that in other preferred embodiments, different variations may be made to the structures of the first buckle member, the second buckle member 3 and the third buckle member 4 as long as the detachable connection among the first buckle member, the second buckle member 3 and the third buckle member 4 is achieved.

It is to be understood that the latching port 5 serves as a first latching portion on the first buckle member 2, and the latching pin 18 serves as a second latching portion on the third buckle member 4; in other preferred embodiments, the first buckle member 2 and the third buckle member 4 may be adaptively adjusted according to the structure of the second buckle member 3, as long as this structure falls within the wording of claim 1.

With reference to Fig. 7, in a state where the two first clamping protrusions 11 of the second buckle member 3 are disposed oppositely, and the two second clamping protrusions 14 are also disposed oppositely, both the first latching portion of the first buckle member 2 and the second latching portion on the third buckle member 4 may be configured as the latching pin 18 for being latched with the first clamping structure and the second clamping structure.

With reference to Fig. 8, in a state where the two first clamping protrusions 11 of the second buckle member 3 are disposed oppositely, and the two second clamping protrusions 14 are also disposed oppositely, both the first latching portion of the first buckle member 2 and the second latching portion on the third buckle member 4 may be configured as the latching port 5 for being latched with the first clamping structure and the second clamping structure.

With reference to Fig. 9, the directions of the two first clamping protrusions 11 and the two second clamping protrusions 14 in the second buckle member 3 may be changed while changing the directions of the first buckle member 2 and the third buckle member 4, so that the detachable connection among the first buckle member, the second buckle member 3 and the third buckle member 4 is achieved.

### Embodiment Two

The present embodiment discloses an air conditioner, which includes a panel, a middle frame and a base, and employs the buckle assembly 1 disclosed in Embodiment One. The first buckle member 2 is connected to the base, the second buckle member 3 is connected to a middle frame, and the third buckle member 4 is connected to a panel, so that a detachable connection among the panel, the middle frame and the base is achieved, wherein the connection is firm.

It should be understood that in other preferred embodiments, the first buckle member 2, the second buckle member 3, and the third buckle member 4 may be respectively integrated with the base, the middle frame, and the panel. Thereby forming a structure as below:
The two elastic tabs 9 are disposed on the middle frame, and the two elastic tabs 9 are disposed on the middle frame respectively and oppositely. The same ends of the two elastic tabs 9 are provided with a first clamping protrusion 11 respectively, and form a first latching structure 12 together. The other ends of the two elastic tabs 9 are provided with a second clamping protrusion 14 respectively, and form a second latching structure 15.

The middle frame is opened with a through hole 10, the base is provided with a first latching portion, and the first latching portion is clamped with the first latching structure 12. The panel is provided with a second latching portion, and the first latching portion passes through the through hole 10 and is clamped with the second latching structure 15, or the second latching structure 15 passes through the through hole 10 and is latched with the second latching portion.

It should be understood that in other preferred embodiments, the buckle assembly 1 disclosed in Embodiment One may further be applied to other structures of the air conditioner, such as connection of a wiring cover, the middle frame, and the base.

It should be understood that in the buckle assembly 1 of the present invention, two elastic tabs 9 of a second buckle member 3 are disposed oppositely on a connecting base 7, and the connecting base 7 is provided with a though hole 10, so that when the first latching structure 12 formed on the same end of the two elastic tabs 9 is latched with a first latching portion of a first buckle member 2, a second buckling structure formed by the other ends of the two elastic tabs 9 may be latched with a second latching portion of a third buckle member 4 through the through hole 10, thereby achieving the connection of the first buckle member 2, the second buckle member 3, and the third buckle member 4, wherein the connection is firm, the disassembly is facilitated, and the design is compact while having strong versatility.

In the air conditioner disclosed by the embodiment of the present invention, the two elastic tabs 9 are disposed oppositely on the middle frame, and the middle frame is provided with a though hole 10, so that when the first latching structure 12 formed on the same end of the two elastic tabs 9 is latched with a first latching portion of the base, a second buckling structure formed by the other ends of the two elastic tabs 9 may be latched with a second latching portion of the panel through the through hole 10, thereby achieving the connection of the panel, the middle frame and the base, wherein the connection is firm, the disassembly is facilitated, and the design is compact while prolonging the service life.

The above are only the preferred embodiments of the present invention and are not intended to limit the present invention.

## Claims

1. A buckle assembly, comprising: a first buckle member (2), a second buckle member (3), and a third buckle member (4);
wherein the second buckle member (3) comprises a connecting base (7) and two elastic tabs (9), and the two elastic tabs (9) are disposed on the connecting base (7) respectively and are oppositely disposed; two first clamping protrusions (11) are respectively disposed on the same ends of the two elastic tabs (9), and form a first latching structure (12); two second clamping protrusions (14) are respectively disposed on the other ends of the two elastic tabs, and form a second latching structure (15);
the connecting base (7) is opened with a through hole (10), a first latching portion is disposed on the first buckle member (2), and the first latching portion is latched with the first latching structure (12); a second latching portion is disposed on the third buckle member (4), and the second latching portion passes through the through hole (10) and is clamped with the second latching structure (15), or the second latching structure (15) passes through the through hole (10) and is latched with the second latching portion;
wherein the first clamping protrusions (11) of the two elastic tabs (9) are respectively disposed on one side of the two elastic tabs (9), and are disposed oppositely; the first latching portion is a latching port (5), and the first latching structure (12) extends into the latching port (5) and is clamped with the first buckle member (2);
the second clamping protrusions (14) of the two elastic tabs (9) are respectively disposed on the other side of the two elastic tabs (9), and are disposed oppositely; the second latching portion is a latching pin (18), and the first latching pin (18) extends into between the second clamping protrusions (14) of the two elastic tabs (9) and is clamped with the second latching structure (15);
**characterized in that**:
two connecting plates (8) are protruded from the connecting base (7), and the two elastic tabs (9) are respectively disposed on one end of the two connecting plates (8) away from the connecting base (7) and form an elastic structure having a h-shaped cross section; a limit groove (13) is formed between the first clamping protrusions (11) and the connecting plates (8), and the first buckle member (2) is disposed in the limit groove (13).

2. The buckle assembly according to claim 1, wherein the latching port (5) has a rectangle cross section, and the first clamping protrusions (11) of the two elastic tabs (9) have an elongated strip shape and are clamped with two oppositely-disposed inner walls of the latching port (5) respectively.

3. The buckle assembly according to claim 2, wherein the two inner walls of the latching port (5) have inclined planes (6), and the two inclined planes (6) are disposed oppositely and used to cooperate with the first clamping protrusions (11) of the two elastic tabs (9) respectively.

4. The buckle assembly according to claim 1, wherein the latching pin (18) comprises a first connecting section (19) and a second connecting section (20) that are connected with each other, and two sides of the first connecting section (19) and the second connecting section (20) form clamp grooves (21) respectively; the second connecting section (20) extends into between the second clamping protrusions (14) of the two elastic tabs (9), and the two second clamping protrusions (14) are clamped with the two clamp grooves (21) respectively.

5. The buckle assembly according to claim 4, wherein each of the clamp grooves (21) and the second clamping protrusions (14) has an elongated strip shape, and each of the clamp grooves (21) and the second clamping protrusions (14) has an arc-shaped cross section.

6. The buckle assembly according to claim 4, wherein the latching pin (18) further comprises a third connecting section (22), the third connecting section (22) is disposed on the second connecting section (20), and a distance between the third connecting section (22) and the adjacent elastic tab (9) is smaller than a thickness of the first clamping protrusion (11).

7. The buckle assembly according to claim 1, wherein the third buckle member (4) comprises a connecting body (17), the connecting body (17) has an abutment surface (23), the second latching portion is disposed on the connecting body (17), and the abutment surface (23) abuts against the connecting base (7) in a state where the second latching structure (15) is latched with the second latching portion.

8. An air conditioner, **characterized in that**, the air conditioner comprises a panel, a middle frame, a base and the buckle assembly (1) according to any one of claims 1 to 7, wherein the first buckle member (2) is connected to the base, the connecting base (7) is connected to the middle frame, and the third buckle member (4) is connected to the panel.

## Patentansprüche

1. Rastanordnung, umfassend: ein erstes Rastelement (2), ein zweites Rastelement (3) und ein drittes Rastelement (4);
wobei das zweite Rastelement (3) eine Verbindungsbasis (7) und zwei elastische Laschen (9) umfasst und die zwei elastischen Laschen (9) jeweils an der Verbindungsbasis (7) angeordnet sind und sich gegenüberliegend angeordnet sind; zwei erste Klemmvorsprünge (11) jeweils an denselben Enden der zwei elastischen Laschen (9) angeordnet sind und eine erste Verriegelungsstruktur (12) bilden; zwei zweite Klemmvorsprünge (14) jeweils an den anderen Enden der zwei elastischen Laschen angeordnet sind und eine zweite Verriegelungsstruktur (15) bilden;
die Verbindungsbasis (7) mit einem Durchgangsloch (10) geöffnet ist, ein erster Verriegelungsabschnitt an dem ersten Rastelement (2) angeordnet ist, und der erste Verriegelungsabschnitt mit der ersten Verriegelungsstruktur (12) verriegelt ist; ein zweiter Verriegelungsabschnitt an dem dritten Rastelement (4) angeordnet ist und der zweite Verriegelungsabschnitt durch das Durchgangsloch (10) hindurchgeht und mit der zweiten Verriegelungsstruktur (15) geklemmt ist oder die zweite Verriegelungsstruktur (15) durch das Durchgangsloch (10) hindurchgeht und mit dem zweiten Verriegelungsabschnitt verriegelt ist;
wobei die ersten Klemmvorsprünge (11) der zwei elastischen Laschen (9) jeweils auf einer Seite der zwei elastischen Laschen (9) angeordnet sind und sich gegenüberliegend angeordnet sind; der erste Verriegelungsabschnitt eine Verriegelungsöffnung (5) ist und die erste Verriegelungsstruktur (12) sich in die Verriegelungsöffnung (5) erstreckt und mit dem ersten Rastelement (2) geklemmt ist;
die zweiten Klemmvorsprünge (14) der zwei elastischen Laschen (9) jeweils auf der anderen Seite der zwei elastischen Laschen (9) angeordnet sind und sich gegenüberliegend angeordnet sind; der zweite Verriegelungsabschnitt ein Verriegelungszapfen (18) ist, und der erste Verriegelungszapfen (18) sich zwischen die zweiten Klemmvorsprünge (14) der zwei elastischen Laschen (9) erstreckt und mit der zweiten Verriegelungsstruktur (15) geklemmt ist,
**dadurch gekennzeichnet, dass**
zwei Verbindungsplatten (8) von der Verbindungsbasis (7) abstehen und die zwei elastischen Laschen (9) jeweils an einem von der Verbindungsbasis (7) entfernten Ende der zwei Verbindungsplatten (8) angeordnet sind und eine elastische Struktur bilden, die einen h-förmigen Querschnitt aufweist; eine Begrenzungsnut (13) zwischen den ersten Klemmvorsprüngen (11) und den Verbindungsplatten (8) gebildet ist und das erste Rastelement (2) in der Begrenzungsnut (13) angeordnet ist.

2. Rastanordnung nach Anspruch 1, wobei die Verriegelungsöffnung (5) einen rechteckigen Querschnitt aufweist und die ersten Klemmvorsprünge (11) der zwei elastischen Laschen (9) eine längliche Streifenform aufweisen und jeweils an zwei sich gegenüberliegenden Innenwänden der Verriegelungsöffnung (5) geklemmt sind.

3. Rastanordnung nach Anspruch 2, wobei die zwei Innenwände der Verriegelungsöffnung (5) schräge Ebenen (6) aufweisen und die zwei schrägen Ebenen (6) sich gegenüberliegend angeordnet sind und jeweils mit den ersten Klemmvorsprüngen (11) der zwei elastischen Laschen (9) kooperieren.

4. Rastanordnung nach Anspruch 1, wobei der Verriegelungszapfen (18) einen ersten Verbindungsabschnitt (19) und einen zweiten Verbindungsabschnitt (20) umfasst, die miteinander verbunden sind, und zwei Seiten des ersten Verbindungsabschnitts (19) und des zweiten Verbindungsabschnitts (20) jeweils Klemmnuten (21) bilden; der zweite Verbindungsabschnitt (20) sich zwischen die zweiten Klemmvorsprünge (14) der zwei elastischen Laschen (9) erstreckt, und die zwei zweiten Klemmvorsprünge (14) jeweils mit den zwei Klemmnuten (21) geklemmt sind.

5. Rastanordnung nach Anspruch 4, wobei jede der Klemmnuten (21) und der zweiten Klemmvorsprünge (14) eine längliche Streifenform aufweist und jede der Klemmnuten (21) und der zweiten Klemmvorsprünge (14) einen bogenförmigen Querschnitt aufweist.

6. Rastanordnung nach Anspruch 4, wobei der Verriegelungszapfen (18) ferner einen dritten Verbindungsabschnitt (22) umfasst, der dritte Verbindungsabschnitt (22) auf dem zweiten Verbindungsabschnitt (20) angeordnet ist und ein Abstand zwischen dem dritten Verbindungsabschnitt (22) und der benachbarten elastischen Lasche (9) kleiner ist als eine Dicke des ersten Klemmvorsprungs (11).

7. Rastanordnung nach Anspruch 1, wobei das dritte Rastelement (4) einen Verbindungskörper (17) umfasst, der Verbindungskörper (17) eine Anlagefläche (23) aufweist, der zweite Verriegelungsabschnitt auf dem Verbindungskörper (17) angeordnet ist und die Anlagefläche (23) an der Verbindungsbasis (7) in einem Zustand anliegt, in dem die zweite Verriegelungsstruktur (15) mit dem zweiten Verriegelungsabschnitt verriegelt ist.

8. Klimaanlage, **dadurch gekennzeichnet, dass** die Klimaanlage eine Platte, einen mittleren Rahmen, eine Basis und die Rastanordnung (1) nach einem beliebigen der Ansprüche 1 bis 7 umfasst, wobei das erste Rastelement (2) mit der Basis verbunden ist, die Verbindungsbasis (7) mit dem mittleren Rahmen verbunden ist und das dritte Rastelement (4) mit der Platte verbunden ist.

## Revendications

1. Ensemble de boucles, comprenant : un premier élément de boucle (2), un deuxième élément de boucle (3) et un troisième élément de boucle (4) ;
dans lequel le deuxième élément de boucle (3) comprend une base de raccordement (7) et deux pattes élastiques (9), et les deux pattes élastiques (9) sont disposées sur la base de raccordement (7) respectivement et sont disposées de manière opposée ; deux premières saillies de serrage (11) sont respectivement disposées sur les mêmes extrémités des deux pattes élastiques (9), et forment une première structure de fixation (12) ; deux secondes saillies de serrage (14) sont respectivement disposées sur les autres extrémités des deux pattes élastiques, et forment une seconde structure de fixation (15) ;
la base de raccordement (7) est ouverte avec un trou traversant (10), une première partie de fixation est disposée sur le premier élément de boucle (2), et la première partie de fixation est fixée à la première structure de fixation (12) ; une seconde partie de fixation est disposée sur le troisième élément de boucle (4), et la seconde partie de fixation passe par le trou traversant (10) et est serrée avec la seconde structure de fixation (15), ou la seconde structure de fixation (15) passe par le trou traversant (10) et est serrée avec la seconde partie de fixation ;
dans lequel les premières saillies de serrage (11) des deux pattes élastiques (9) sont respectivement disposées sur un côté des deux pattes élastiques (9), et sont disposées de manière opposée ; la première partie de fixation est un orifice de fixation (5), et la première structure de fixation (12) s'étend dans l'orifice de fixation (5) et est serrée avec le premier élément de boucle (2) ;
les secondes saillies de serrage (14) des deux pattes élastiques (9) sont respectivement disposées sur l'autre côté des deux pattes élastiques (9), et sont disposées de manière opposée ; la seconde partie de fixation est une broche de fixation (18), et la première broche de fixation (18) s'étend entre les secondes saillies de serrage (14) des deux pattes élastiques (9) et est serrée avec la seconde structure de fixation (15) ;
**caractérisé en ce que** :
deux plaques de raccordement (8) font saillie depuis la base de raccordement (7), et les deux pattes élastiques (9) sont respectivement disposées sur une extrémité des deux plaques de raccordement (8) à distance de la base de raccordement (7) et forment une structure élastique ayant une coupe transversale en forme de h ; une rainure de limitation (13) est formée entre les premières saillies de serrage (11) et les plaques de raccordement (8), et le premier élément de boucle (2) est disposé dans la rainure de limitation (13).

2. Ensemble de boucles selon la revendication 1, dans lequel l'orifice de fixation (5) a une coupe transversale rectangulaire, et les premières saillies de serrage (11) des deux pattes élastiques (9) ont une forme de bande allongée et sont serrées avec deux parois intérieures disposées de manière opposée de l'orifice de fixation (5) respectivement.

3. Ensemble de boucles selon la revendication 2, dans lequel les deux parois intérieures de l'orifice de fixation (5) ont des plans inclinés (6), et les deux plans inclinés (6) sont disposés de manière opposée et utilisés pour coopérer avec les premières saillies de serrage (11) des deux pattes élastiques (9) respectivement.

4. Ensemble de boucles selon la revendication 1, dans lequel la broche de fixation (18) comprend une première section de raccordement (19) et une deuxième section de raccordement (20) qui sont raccordées l'une à l'autre, et deux côtés de la première section de raccordement (19) et la deuxième section de raccordement (20) forment des rainures de serrage (21) respectivement ; la deuxième section de raccordement (20) s'étend entre les secondes saillies de serrage (14) des deux pattes élastiques (9), et les deux secondes saillies de serrage (14) sont serrées avec les deux rainures de serrage (21) respectivement.

5. Ensemble de boucles selon la revendication 4, dans lequel chacune des rainures de serrage (21) et des secondes saillies de serrage (14) a une forme de bande allongée, et chacune des rainures de serrage (21) et des secondes saillies de serrage (14) a une coupe transversale en forme d'arc.

6. Ensemble de boucles selon la revendication 4, dans lequel la broche de serrage (18) comprend en outre une troisième section de raccordement (22), la troisième section de raccordement (22) est disposée sur la deuxième section de raccordement (20), et une distance entre la troisième section de raccordement (22) et la patte élastique (9) adjacente est plus petite qu'une épaisseur de la première saillie de serrage (11).

7. Ensemble de boucles selon la revendication 1, dans lequel le troisième élément de boucle (4) comprend un corps de raccordement (17), le corps de raccordement (17) a une surface de butée (23), la seconde partie de fixation est disposée sur le corps de raccordement (17), et la surface de butée (23) vient en butée contre la base de raccordement (7) dans un état où la seconde structure de fixation (15) est fixée à la seconde partie de fixation.

8. Climatiseur, **caractérisé en ce que** le climatiseur comprend un panneau, un cadre intermédiaire, une base et l'ensemble de boucles (1) selon l'une quelconque des revendications 1 à 7, dans lequel le premier élément de boucle (2) est raccordé à la base, la base de raccordement (7) est raccordée au cadre intermédiaire, et le troisième élément de boucle (4) est raccordé au panneau.
